Europäisches Patentamt

European Patent Office

Office européen des brevets

(19)

(11) **EP 1 102 447 A1**

(12) # DEMANDE DE BREVET EUROPEEN

(43) Date de publication:
**23.05.2001 Bulletin 2001/21**

(51) Int Cl.7: **H04L 27/22**, H04L 27/227,
H04L 27/38

(21) Numéro de dépôt: **00403150.6**

(22) Date de dépôt: **13.11.2000**

(84) Etats contractants désignés:
**AT BE CH CY DE DK ES FI FR GB GR IE IT LI LU
MC NL PT SE TR**
Etats d'extension désignés:
**AL LT LV MK RO SI**

(30) Priorité: **18.11.1999 FR 9914493**

(71) Demandeur: **ALCATEL
75008 Paris (FR)**

(72) Inventeurs:
• **Marguinaud, André
91120 Palaiseau (FR)**
• **Bertrand, Pierre, Résidence Aurélia
06600 Antibes (FR)**

(74) Mandataire: **Smith, Bradford Lee et al
COMPAGNIE FINANCIERE ALCATEL
Dépt. Propr. Industrielle,
30, avenue Kléber
75116 Paris (FR)**

(54) **Procédé pour estimer la fréquence porteuse d'un signal numérique à modulation de phase**

(57) L'invention est relative à un procédé d'estimation de la fréquence porteuse d'un signal numérique modulé en phase à N états représentant N symboles dans lequel on effectue:

un filtrage préliminaire du signal reçu,
une multiplication de la phase du signal reçu par le nombre N,
un filtrage supplémentaire à fronts raides, et plat dans la bande, de largeur égale à la plage d'incertitude ($\Delta f_o$) de la fréquence $Nf_o$ et centré sur cette plage,
la transformée de Fourier du signal reçu à phase multipliée par N, et
la détermination de la fréquence ($f_o$) pour laquelle la transformée de Fourier est maximale.

Pour déterminer la valeur de la fréquence correspondant au maximum de la transformée de Fourier, on détermine la valeur maximale de la dérivée du carré du module de la transformée de Fourier et on détermine la valeur de la fréquence pour laquelle cette dérivée est nulle.

FIG.2

EP 1 102 447 A1

## Description

L'invention est relative à un procédé d'estimation de la fréquence porteuse d'un signal modulé en phase.

Les transmissions radio-numériques font le plus souvent appel à la modulation de phase. Une telle transmission à modulation de phase consiste à émettre une porteuse sinusoïdale, par exemple à amplitude constante, de pulsation $\omega_o$ déterminée et à affecter cette porteuse, à chaque période de symbole, d'un déphasage qui dépend de la valeur du symbole à transmettre. Si le symbole à transmettre est un chiffre binaire 0 ou 1, le déphasage ne peut prendre que deux valeurs, par exemple 0 ou $\pi$. Si le symbole est un nombre binaire à deux chiffres, le déphasage prendra quatre valeurs, par exemple 0, $\pi/2$, $\pi$ et $3\pi/2$ radians. Le déphasage de 0 radian correspondant par exemple au symbole 00, le déphasage de $\pi/2$ à 01, le déphasage de $\pi$ à 10 et le déphasage de $3\pi/2$ à 11. Une telle modulation de phase est souvent notée M-PSK (pour "Phase Shift Keying", en langue anglaise), M étant le nombre total de phases possibles.

Quand un tel signal modulé en phase est reçu, l'équipement de réception détermine la valeur du déphasage afin de déterminer la valeur des symboles. Pour déterminer les déphasages, c'est-à-dire la partie informative du signal reçu, il faut que le récepteur (modem) connaisse les autres paramètres de ce signal, à savoir l'amplitude, la fréquence et la phase initiale.

En effet, le signal reçu s'exprime, en général, par le nombre complexe Z ayant la valeur suivante :

$$Z(t) = Ae^{j\left(\omega_o t + \varphi_o + m\frac{\pi}{2}\right)} \qquad (1)$$

Dans cette formule, t est le temps, A est l'amplitude de la porteuse, $\omega_o = 2\pi f_o$ est la pulsation de la fréquence porteuse, $\varphi_o$ est un déphasage initial et m est un nombre entier qui représente le symbole. Dans l'exemple indiqué ci-dessus, m peut prendre les valeurs 0, 1, 2 et 3 et à ces valeurs correspondent respectivement les symboles 00, 01, 10 et 11.

j est le nombre imaginaire tel que :

$$j^2 = -1 \qquad (2)$$

Si les valeurs A (amplitude), $\varphi_o$ (phase initiale) et $\omega_o$ sont connues, on peut en déduire aisément le nombre m. Il suffit en effet de multiplier Z(t) par :

$$\frac{1}{A}e^{-j(\varphi_0 + \omega_0 t)} \qquad (3)$$

On obtient ainsi :

$$Z(t)\cdot\frac{1}{A}e^{-j(\varphi_o + \omega_o t)} = e^{jm\frac{\pi}{2}} \qquad (4)$$

En général, le récepteur dispose d'une information sur la fréquence attendue de la porteuse. Mais, souvent, cette fréquence porteuse n'a pas exactement la valeur attendue ; c'est pourquoi il faut pouvoir l'estimer. Les causes d'écart par rapport à la fréquence porteuse peuvent être diverses : il s'agit par exemple de l'effet Doppler quand le récepteur ou l'émetteur est mobile ou encore, il peut s'agir aussi d'une imprécision de l'horloge locale de l'émetteur qui détermine la fréquence porteuse.

Pour déterminer la fréquence de la porteuse, on applique une transformée de Fourier au signal reçu. En effet, la transformée de Fourier fournit le spectre du signal reçu, c'est-à-dire la courbe de variation de l'amplitude du signal en fonction de la fréquence. Ce spectre présente théoriquement une raie centrale de grande amplitude par rapport au reste du spectre, cette raie se trouvant à la fréquence $f_o$. Toutefois, cette raie présente une certaine largeur, en raison du calcul de la transformée de Fourier sur une durée finie. Par ailleurs, la position en fréquence de la raie centrale est sujette à des imprécisions, en raison du bruit additif du canal de transmission et parce que la mesure fait appel à un échantillonnage.

Pour réduire le bruit avant d'effectuer la transformation de Fourier, il est connu de faire appel à un filtre passe-bande du type Nyquist, de bande relativement large. Ainsi, le bruit, qui est réparti uniformément sur le spectre, est éliminé en dehors de la bande passante du filtre de Nyquist.

Ensuite, avant d'effectuer la transformée de Fourier, pour obtenir une porteuse pure, on multiplie la phase du signal reçu Z(t) par le nombre N de symboles, c'est-à-dire par quatre dans l'exemple indiqué ci-dessus. A cet effet, on peut, par exemple, élever le signal Z(t) à la puissance N. Ainsi quand N = 4 :

$$\left[\frac{Z(t)}{A}\right]^4 = e^{j\left(4\omega_0 t + m\frac{4\pi}{2} + 4\varphi_0\right)}$$

$$= e^{j\left(4\omega_0 t + 4\varphi_0\right)} \tag{5}$$

On voit ainsi que ce signal élevé à la puissance N ne dépend pas de m, c'est-à-dire de la valeur modulante.

Ensuite, on effectue la transformée de Fourier de ce signal pur, ce qui fournit la valeur $4\omega_0$. Il suffit ensuite de diviser la valeur obtenue par 4.

Malgré la présence du filtre de Nyquist, ce procédé d'estimation de la fréquence porteuse du signal reçu est très sensible au bruit, ce qui constitue un inconvénient particulièrement gênant pour un système de communication radio pour lequel les sources de perturbation sont nombreuses.

L'invention concerne, selon un premier de ses aspects, un procédé d'estimation de fréquence porteuse permettant une meilleure élimination du bruit que dans le procédé connu.

L'invention se rapporte aussi, selon un second de ses aspects, à un procédé d'estimation de fréquence porteuse qui, pour un niveau de bruit donné, fournit une estimation plus précise que le procédé connu.

Ainsi, selon le premier aspect de l'invention, le procédé d'estimation de fréquence porteuse d'un signal numérique à modulation de phase consiste à effectuer un filtrage de Nyquist du signal reçu, à multiplier ensuite la phase du signal reçu par le nombre N de symboles, ou par un multiple de ce nombre N, puis à effectuer la transformée de Fourier de ce signal à phase multipliée par N, et il est caractérisé en ce qu'après la multiplication de la phase du signal par le nombre N, ou par un multiple de N, on effectue un filtrage à l'aide d'un filtre passe-bande à flancs raides, et plat dans la bande, de largeur sensiblement égale à la plage d'incertitude de la fréquence porteuse et centré sur cette plage.

De préférence, ce filtre passe-bande à flancs raides, et plat dans la bande, est du type Hermite comme décrit dans le brevet américain N° 5 886 913.

L'invention est basée sur la constatation que la multiplication de la phase par le nombre N augmente le bruit de façon significative, ce bruit étant diminué de façon sensible grâce au filtre à flancs raides. En outre, l'utilisation d'un filtre à flancs raides permet une bande passante sensiblement plus étroite qu'avec un filtre de Nyquist et donc une meilleure élimination du bruit.

Il est à noter que ce filtre est utilisé après la multiplication de la phase du signal par N car, avant cette multiplication, le signal reçu n'étant pas un signal à fréquence pure un filtrage plus étroit que le demi-lobe principal distordrait le signal, alors qu'après multiplication de la phase par N, le signal est à fréquence pure et on peut filtrer de façon aussi étroite que le permet la plage d'incertitude fréquentielle, la distorsion intersymbole n'intervenant plus.

Un filtre de Hermite présente l'avantage de nécessiter une quantité de calculs relativement modérée.

L'invention concerne aussi, selon un second de ses aspects, qui peut être utilisé indépendamment du premier aspect ou en combinaison avec ce dernier, un procédé d'estimation de la fréquence d'une porteuse d'un signal numérique modulé en phase dans lequel on effectue un filtrage de Nyquist du signal reçu, on multiplie la phase du signal reçu par le nombre N de symboles, ou par un multiple de ce dernier, et on effectue la transformée de Fourier du signal à phase multipliée par N, ou par un multiple de N, et on détermine la fréquence pour laquelle le spectre ainsi obtenu présente un maximum, ce procédé étant caractérisé en ce que, pour déterminer la fréquence du maximum du spectre, on détermine la dérivée de ce spectre et la fréquence pour laquelle cette dérivée est nulle.

Cette dérivée peut être obtenue par le calcul de la quantité suivante :

$$D = \text{Im}\left[\text{FFT}(Z_t) \cdot \text{FFT}^*(tZ_t)\right] \tag{6}$$

Dans cette formule, Im signifie la partie imaginaire de la quantité entre crochets, $\text{FFT}(Z_t)$ signifie la transformée de Fourier du signal Z échantillonné à l'instant t et le second terme de la multiplication dans le crochet est la valeur conjuguée de la transformée de Fourier de la quantité $tZ_t$. On rappelle ici que la valeur conjuguée d'un nombre complexe $a + jb$ est le nombre complexe $a - jb$.

Dans le procédé connu, on détermine le sommet du spectre soit par interpolation en considérant que près du sommet la variation est parabolique, soit par suréchantillonnage en prenant la valeur la plus élevée du spectre ainsi suréchantillonné.

Au cours d'études effectuées dans le cadre de l'invention, les inventeurs ont constaté que, de façon surprenante, pour une complexité donnée, c'est-à-dire pour une puissance de calcul déterminée, on obtenait une meilleure précision sur $f_0$ en faisant appel au passage par zéro de la dérivée du spectre plutôt qu'en déterminant la fréquence pour laquelle le spectre présente un maximum.

De façon analogue, on a montré que, pour une précision donnée, et une puissance de calcul déterminée, avec l'invention, le temps de calcul est au plus la moitié du temps de calcul par le procédé classique de détermination directe du sommet du spectre.

Grâce à cette amélioration de précision, le procédé permet d'estimer la fréquence porteuse de signaux ayant un rapport signal à bruit plus bas qu'avec les modems connus. On peut ainsi détecter des signaux affectés de davantage de bruit.

Les premier et second aspects de l'invention sont aussi applicables à l'estimation de la fréquence porteuse d'un signal modulé en phase qui, en outre, est modulé aussi en amplitude. Dans ce cas, la multiplication de phases par N ne supprime pas complètement la modulation mais seulement certains états de modulation ; l'avantage de cette disposition est que le rythme de la modulation est ralenti et qu'ainsi le spectre du signal est rétréci. Autrement dit, dans ce cas la multiplication de phases par N ne fournit pas une raie pure comme dans le cas de la pure modulation de phase. Mais le rétrécissement du spectre du signal contribue à l'amélioration de la précision dans la recherche de la fréquence porteuse, par rapport au cas où cette recherche est effectuée sans multiplication des phases par N.

Il est vrai que l'amélioration de la précision obtenue est à première vue moins importante que dans le cas d'un signal uniquement modulé en phase, mais en général le niveau de rapport signal à bruit d'un signal modulé en amplitude est sensiblement supérieur, de plus de 10 dB, au niveau de rapport signal à bruit pour les signaux modulés en phase. Ainsi, par rapport à un signal uniquement modulé en phase, un signal qui est à la fois modulé en phase et en amplitude peut admettre des niveaux de bruit supérieurs.

L'invention concerne aussi les récepteurs ou modems utilisant les procédés selon l'invention.

L'invention prévoit donc un procédé d'estimation de la fréquence porteuse d'un signal numérique modulé en phase à N états représentant N symboles dans lequel on effectue : un filtrage préliminaire du signal reçu, une multiplication de la phase du signal reçu par le nombre N, ou un multiple de ce dernier, la transformée de Fourier du signal reçu à phase multipliée par N, ou par un multiple de N, et la détermination de la fréquence pour laquelle la transformée de Fourier est maximale.

Selon l'invention, après la multiplication de la phase par N, ou par un multiple de N, et avant d'effectuer la transformée de Fourier, on effectue un filtrage supplémentaire à fronts raides, et plat dans la bande, de largeur égale à la plage d'incertitude de la fréquence $Nf_0$ et centré sur cette plage.

Selon un mode de réalisation, le filtrage à fronts raides et plat dans la bande est un filtrage de Hermite.

Selon un mode de réalisation, pour déterminer la valeur de la fréquence correspondant au maximum de la transformée de Fourier, on détermine la valeur maximale de la dérivée du carré du module de la transformée de Fourier et on détermine la valeur de la fréquence pour laquelle cette dérivée est nulle.

Selon un mode de réalisation, on détermine la fréquence correspondant au maximum de la transformée de Fourier en déterminant la fréquence pour laquelle la quantité D est nulle, D ayant la valeur suivante :

$$D = \text{Im}\left[ \text{FFT}(Z_t) \cdot \text{FFT}^*(tZ_t) \right] \quad (6)$$

$Z_t$ représentant la valeur complexe d'un signal échantillonné, $\text{FFT}(Z_t)$ la transformée de Fourier de ce signal, $\text{FFT}^*(tZ_t)$ la valeur conjuguée de la transformée du signal $tZ_t$, $t$ le temps, et Im la partie imaginaire du nombre complexe entre crochets.

Selon un mode de réalisation, le signal détecté est également modulé en amplitude.

L'invention prévoit en outre une application du procédé à une transmission de signaux radio.

D'autres caractéristiques et avantages de l'invention apparaîtront avec la description de certains de ses modes de réalisation, celle-ci étant effectuée en se référant aux dessins ci-annexés sur lesquels :

la figure 1 est un diagramme montrant un filtrage classique de Nyquist effectué en amont de la multiplication de la phase du signal reçu par N, et

la figure 2 est un diagramme illustrant le filtrage selon un aspect de l'invention.

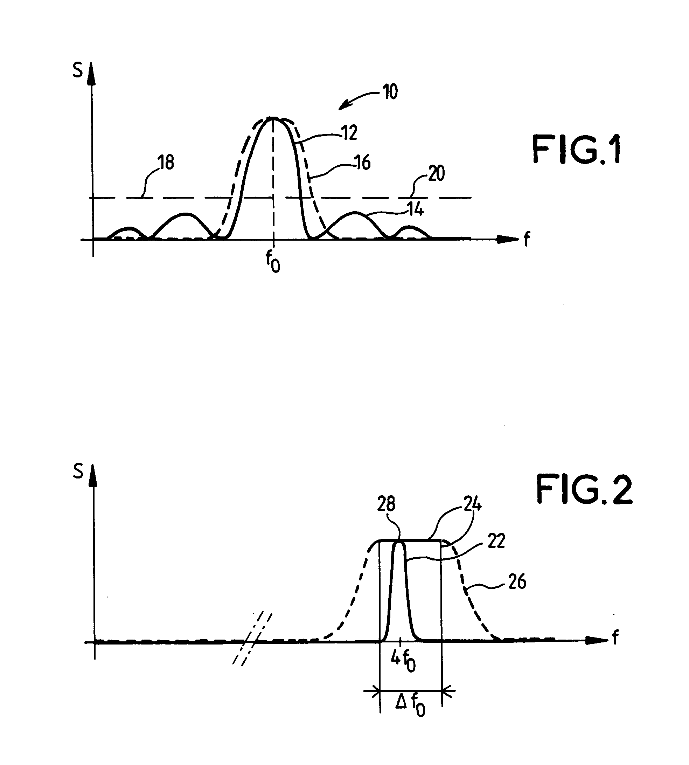

Sur le diagramme de la figure 1, on a représenté le spectre du signal reçu, c'est-à-dire une courbe 10 de variation de l'amplitude S du signal en fonction de la fréquence. Étant donné que le signal reçu ne constitue pas une fréquence pure, il présente une raie centrale (ou lobe principal) 12 relativement large, centrée sur la fréquence $f_o$ de la porteuse, et des lobes secondaires 14 de part et d'autre de la raie centrale 12.

Pour réduire le bruit, on applique un filtrage de Nyquist représenté par la courbe 16. Un filtre de Nyquist est un filtre passe-bande centré sur $f_o$. Il élimine le bruit 18, 20 en dehors de la bande passante du signal.

Après ce filtrage on multiplie la phase de signal par le nombre N de symboles, c'est-à-dire par quatre dans l'exemple. Dans ces conditions, on obtient un signal à fréquence pure centré sur $4f_o$. Ce spectre est représenté par la courbe 22 sur le diagramme de la figure 2.

Selon le premier aspect de l'invention, on soumet ce signal à un filtrage à fronts raides de largeur égale à la plage $\delta f_o$ d'incertitude de la fréquence $4f_o$ et centré sur cette plage. Ce filtrage à fronts raides est représenté par le signal rectangulaire 24 sur la figure 2. Il permet une élimination supplémentaire du bruit.

Le bruit éliminé est, d'une part, le bruit résiduel laissé par le filtrage de Nyquist, et, d'autre part, les bruits supplémentaires apportés par la multiplication de la phase par N.

Ce filtrage 24 à fronts raides, et plat dans la bande, est effectué à l'aide d'un filtre de Hermite qui peut être réalisé à coût modéré. En effet, la particularité de ce filtre est de présenter, pour un nombre donné de coefficients de filtrage, un compromis optimal entre la planéité dans la bande et la raideur de réjection. Ainsi, l'utilisation d'un autre type de filtre, tel qu'un filtre 26 à fronts étalés, rendrait l'amélioration peu sensible par rapport au filtrage de Nyquist 16 effectué au cours de la première étape du procédé, car cet autre filtrage 26, du fait de ses fronts étalés, n'aurait pas une largeur beaucoup plus faible que le filtrage 16.

Le second aspect de l'invention consiste à déterminer le maximum 28 de la courbe 22 en déterminant la dérivée de la transformée de Fourier du signal d'entrée Z.

A cet effet, on détermine la quantité D telle que :

$$D = \text{Im}\left[ \text{FFT}(Z_t) \cdot \text{FFT}^*(tZ_t) \right] \qquad (6)$$

Cette quantité D représente la dérivée du module de la transformée de Fourier du signal Z. En effet, la transformée de Fourier du signal $Z_t$ en représentation complexe a pour valeur :

$$F_\omega[Z(t)] = \frac{1}{\sqrt{2\pi}} \int_{-\infty}^{+\infty} Z(t)e^{-j\omega t}dt \qquad (7)$$

Le carré du module de cette transformée de Fourier s'exprime par :

$$\left| F_\omega[Z(t)] \right|^2 = F_\omega[Z(t)] \cdot F_\omega[Z(t)]^* \qquad (8)$$

La dérivée de ce carré du module de la transformée de Fourier par rapport à $\omega$, c'est-à-dire par rapport à la fréquence, s'écrit donc :

$$\frac{d}{d\omega}\left| F_\omega[Z(t)] \right|^2 = \frac{j}{2\pi}\left[ -F_\omega[Z(t)]^* \int_{-\infty}^{+\infty} tZ(t)e^{-j\omega t}dt + F_\omega[Z(t)]\int_{-\infty}^{+\infty} tZ^*(t)e^{j\omega t}dt \right]$$

$$= \frac{j}{2\pi}\left[ F_\omega[Z(t)] \cdot F_\omega[tZ(t)]^* - F_\omega[Z(t)]^* \cdot F_\omega[tZ(t)] \right]$$

$$= \frac{j}{2\pi}\text{Im}\left[ F_\omega[Z(t)] \cdot F_\omega[tZ(t)]^* \right] \qquad (9)$$

Ainsi, la dérivée du carré du module de la transformée de Fourier est nulle quand :

$$\mathrm{Im}\left[ F\omega[Z(t)] \cdot F\omega[tZ(t)]^* \right] = 0 \qquad\qquad (10)$$

On peut montrer que cette partie imaginaire du produit de la transformée de Fourier du signal $Z_t$ par la transformée de Fourier conjuguée du signal $tZ_t$ est optimale pour la précision de l'estimation. En effet :

A un instant t, un échantillon bruité a pour valeur :

$$Z_t = A \exp j(\omega t + \varphi) + n_t,$$

avec

$$\left\langle n_t n_{t'}^* \right\rangle = 2\sigma^2 \delta_{tt'},$$

$n_t$ étant le bruit et $\delta_{tt'}$ la fonction de Dirac telle que $\varphi_{tt'} = 1$ si $t = t'$ et $\delta_{tt'} = 0$, si $t \neq t'$.

La méthode des moindres carrés pondérés consiste à rechercher les valeurs des paramètres A, $\varphi$, et $\omega$, qui minimisent la forme quadratique G ci-dessous :

$$G \quad \sum_t n_t n_{t'}^* = \sum_t [Z_t - A \exp j(\dot{u}t + \varphi)][Z_t^* - A \exp - j(\dot{u}t + \varphi)]$$

La nullité des dérivées partielles de cette expression par rapport aux paramètres A, $\varphi$ et $\omega$ fournit :

$$\partial_A \Rightarrow A = \frac{1}{l}\Re\left[ \sum_l Z_l \exp - j(\omega t + \varphi) \right],$$

l étant le nombre d'échantillons complexes, et $\Re$ signifiant la partie réelle du nombre entre crochets.

$$\partial_\varphi \Rightarrow -e^{-j\varphi}\sum_t Z_t \exp - j\omega t + e^{j\varphi}\sum_t Z_t^* \exp j\omega t = 0.$$

$$\partial_\omega \Rightarrow -e^{-j\varphi}\sum_t tZt \exp - j\omega t + e^{j\varphi}\sum_t tZ_t^* \exp j\omega t = 0$$

L'élimination de $\varphi$ entre les deux dernières équations donne :

$$\left( \sum_t Z_t \exp - j\omega t \right)\left( \sum_t Z_t^* \exp j\omega t \right) - \left( \sum_t tZ_t^* \exp j\omega t \right)\left( \sum_t Z_t \exp - j\omega t \right) = 0$$

Pour la valeur exacte de $\omega$, le produit de la transformée de Fourier de $tZ_t$ par la transformée inverse de Fourier de $Z_t^*$ est un nombre réel. On obtient la meilleure estimation en prenant l'origine des temps de telle sorte que $\Sigma_t t = 0$. L'estimateur s'écrit donc bien :

$$\text{Im}\left[F\omega(Z_t)F_\omega^*(tZ_t)\right] = 0$$

Pour évaluer la variance, et donc la précision, de l'estimateur de $\omega$, on prend la différentielle totale de l'équation d'estimation et on calcule l'espérance mathématique $<d\omega^2>$ en considérant que les éléments différentiels $dz_t$ et $dz_t^*$ sont des bruits $n_t$ et $n_t^*$ et que l'on est au voisinage de la vraie valeur.

Avec:

$$Z_t = A \exp j(\omega t + \varphi); \quad \Sigma t Z_t \exp - j\omega t = 0,$$

De plus, avec

$$\sum t^2 Z_t \exp\text{-}jt = Ae^{j\alpha}\sum t^2 \quad \text{et} \quad \sum_0^{N-1} Z_t^* e^{j\omega t} = NAe^{-j\varphi},$$

on obtient :

$$jd\omega = \frac{(\sum tdz_t \exp - j\omega t)(\sum z_t^* \exp j\omega t) - (\sum tdz_t^* \exp j\omega t)(\sum z_t \exp - j\omega t)}{(\sum t^2 z_t \exp - j\omega t)(\sum z_t^* \exp j\omega t) + (\sum t^2 z_t^* \exp j\omega t)(\sum z_t \exp - j\omega t)}$$

$$v = <d\omega^2> = \frac{\left\langle \sum_t t^2 \left[ dz_t \exp - j(\omega t + \varphi) - dz_t^* \exp j(\omega t + \varphi) \right]^2 \right\rangle}{\left(2\sum t^2\right)^2 a^2} = \frac{1}{\left(\sum t^2\right)} \times \frac{\sigma^2}{a^2}$$

Une fois $\omega$ estimé, on peut estimer $\varphi$, puis A.

La précision étant optimale, on peut estimer la fréquence porteuse de signaux ayant un faible rapport signal à bruit.

## Revendications

1. Procédé d'estimation de la fréquence porteuse d'un signal numérique modulé en phase à N états représentant N symboles dans lequel on effectue :

un filtrage préliminaire (16) du signal reçu,
une multiplication de la phase du signal reçu par le nombre N, ou un multiple de ce dernier,
la transformée de Fourier du signal reçu à phase multipliée par N, ou par un multiple de N, et
la détermination de la fréquence ($f_o$) pour laquelle la transformée de Fourier est maximale,

caractérisé en ce que, pour déterminer la valeur de la fréquence correspondant au maximum de la transformée de Fourier, on détermine la valeur maximale de la dérivée du carré du module de la transformée de Fourier et on détermine la valeur de la fréquence pour laquelle cette dérivée est nulle.

2. Procédé selon la revendication 1, caractérisé en ce qu'on détermine la fréquence correspondant au maximum de la transformée de Fourier en déterminant la fréquence pour laquelle la quantité D est nulle, D ayant la valeur suivante :

$$D = \text{Im}\left[ \text{FFT}(Z_t) \cdot \text{FFT}^*(tZ_t) \right] \qquad (6)$$

$Z_t$ représentant la valeur complexe d'un signal échantillonné, $\text{FFT}(Z_t)$ la transformée de Fourier de ce signal, $\text{FFT}^*(tZ_t)$ la valeur conjuguée de la transformée du signal $tZ_t$, t le temps, et Im la partie imaginaire du nombre complexe entre crochets.

3. Procédé selon la revendication 1 ou 2, caractérisé en ce que le signal détecté est également modulé en amplitude.

4. Procédé d'estimation de la fréquence porteuse d'un signal numérique modulé en phase à N états représentant N symboles, ce signal étant également modulé en amplitude, ce procédé étant tel qu' on effectue :

    un filtrage préliminaire (16) du signal reçu,
    une multiplication de la phase du signal reçu par le nombre N, ou un multiple de ce dernier,
    après cette multiplication, un filtrage supplémentaire (24) à fronts raides, et plat dans la bande, de largeur égale à la plage d'incertitude ($\Delta f_o$) de la fréquence $Nf_o$ et centré sur cette plage,
    après ce filtrage supplémentaire, la transformée de Fourier du signal reçu à phase multipliée par N, ou par un multiple de N, et
    la détermination de la fréquence ($f_o$) pour laquelle la transformée de Fourier est maximale.

5. Procédé selon la revendication 4, caractérisé en ce que le filtrage à fronts raides et plat dans la bande est un filtrage de Hermite.

6. Procédé selon la revendication 4 ou 5, caractérisé en ce que, pour déterminer la valeur de la fréquence correspondant au maximum de la transformée de Fourier, on détermine la valeur maximale de la dérivée du carré du module de la transformée de Fourier et on détermine la valeur de la fréquence pour laquelle cette dérivée est nulle.

7. Procédé selon la revendication 6, caractérisé en ce qu'on détermine la fréquence correspondant au maximum de la transformée de Fourier en déterminant la fréquence pour laquelle la quantité D est nulle, D ayant la valeur suivante :

$$D = \text{Im}\left[ \text{FFT}(Z_t) \cdot \text{FFT}^*(tZ_t) \right] \qquad (6)$$

$Z_t$ représentant la valeur complexe d'un signal échantillonné, $\text{FFT}(Z_t)$ la transformée de Fourier de ce signal, $\text{FFT}^*(tZ_t)$ la valeur conjuguée de la transformée du signal $tZ_t$, t le temps, et Im la partie imaginaire du nombre complexe entre crochets.

8. Application du procédé selon l'une quelconque des revendications précédentes à une transmission de signaux radio.

FIG.1

FIG.2

**Office européen**
**des brevets**

**RAPPORT DE RECHERCHE EUROPEENNE**

Numéro de la demande

EP 00 40 3150

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | EP 0 556 807 A (NIPPON ELECTRIC CO) 25 août 1993 (1993-08-25) | 4,5,8 | H04L27/227 H04L27/38 |
| A | * page 6, ligne 33 - ligne 55 * | 1-3,6,7 | |
| Y | PALMER L C ET AL: "SYNCHRONIZATION FOR QPSK TRANSMISSION VIA COMMUNICATIONS SATELLITES" IEEE TRANSACTIONS ON COMMUNICATIONS, vol. COM-28, no. 8, août 1980 (1980-08), pages 1302-1314, XP000758589 New York, États-Unis ISSN: 0090-6778 | 4,5,8 | |
| A | * figure 3 * | 6,7 | |
| A | FUJINO T ET AL: "SELF-NOISE PRODUCED BY QUADRUPLING OF QPSK SIGNALS" IEEE TRANSACTIONS ON AEROSPACE AND ELECTRONIC SYSTEMS, vol. 18, no. 5, septembre 1982 (1982-09), pages 701-704, XP000760770 New York, États-Unis ISSN: 0018-9251 * INTRODUCTION * * figure 1 * | 1-8 | |
| A | THAO S ET AL: "CARRIER FREQUENCY ESTIMATION IN SATELLITE COMMUNICATIONS" IEEE VTS 50TH VEHICULAR TECHNOLOGY CONFERENCE, vol. 5, 19 septembre 1999 (1999-09-19), pages 2765-2769, XP002144112 Piscataway, États-Unis * paragraphe 2.1 * * paragraphe 3 * | 1-8 | |

**DOMAINES TECHNIQUES RECHERCHES (Int.Cl.7)**

H04L
H03D
H03J

Le présent rapport a été établi pour toutes les revendications

| Lieu de la recherche | Date d'achèvement de la recherche | Examinateur |
|---|---|---|
| LA HAYE | 11 janvier 2001 | Orozco Roura, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

**ANNEXE AU RAPPORT DE RECHERCHE EUROPEENNE
RELATIF A LA DEMANDE DE BREVET EUROPEEN NO.**

EP 00 40 3150

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-01-2001

| Document brevet cité au rapport de recherche | Date de publication | Membre(s) de la famille de brevet(s) | | Date de publication |
|---|---|---|---|---|
| EP 0556807 A | 25-08-1993 | JP | 2812347 B | 22-10-1998 |
| | | JP | 5227235 A | 03-09-1993 |
| | | AU | 659382 B | 11-05-1995 |
| | | AU | 3313793 A | 19-08-1993 |
| | | CA | 2089620 A,C | 18-08-1993 |
| | | DE | 69318201 D | 04-06-1998 |
| | | DE | 69318201 T | 17-12-1998 |
| | | US | 5363415 A | 08-11-1994 |

EPO FORM P0460